# EUROPEAN PATENT SPECIFICATION

(11) **EP 0 854 071 B1**
(45) Date of publication and mention of the grant of the patent: **21.11.2001**
(21) Application number: 97310727.9
(22) Date of filing: 31.12.1997
(51) Int. Cl.: B60T 7/06

(54) **Releasable brake pedal assembly**
Freigebbare Bremshebel-Zusammensetzung
Assemblage de pédale de frein relâchable

(30) Priority: 16.01.1997 US 784214
(43) Date of publication of application: 22.07.1998
(73) Proprietor: Ford Global Technologies, Inc., Dearborn, Michigan 48136 (US)
(72) Inventor: Jacobson, Alan Lawrence, Farmington Hills, Michigan 48331 (US)
(74) Representative: Messulam, Alec Moses

(56) References cited:
- DE-A- 3 439 118
- DE-A- 3 904 616
- GB-A- 2 279 625
- US-A- 4 621 538

## Description

The present invention relates generally to brake pedal assemblies, and more specifically to a brake pedal assembly that is releasable from an operative condition upon imposition of a frontal load to an automotive vehicle.

It is well known in the automotive vehicle design arts that it is desirable to configure components arrayed within the passenger compartment of the vehicle to reduce adverse effects on the vehicle occupants when subjected to high intrusion forces such as are experienced in a collision.

While most attention has been given to the design of vehicle interior components immediately facing the vehicle occupants, including steering wheels, instrument panels, door and pillar trim, and headliners, the design solutions provided for those components have been found not to be suitable for dealing with another set of common components such as foot pedals, generally positioned below the instrument panel of the vehicle at the driver's compartment.

One treatment in the related art to accommodate pedal structure in a vehicle for intrusive loads is that of U.S. Patent 4,621,538, to Senft et al. This patent deals with a foot operated parking brake which utilises pivotal movement of the pedal to respond to intrusive forces. For brake, clutch, and accelerator pedals, however, and in particular for service brake pedals, the solution of the '538 patent is inapt because the parking brake is rotatably actuated and is not required to deal with the axial driving of the piston rod of a brake master cylinder toward the foot operated pedal, as is the case in many common service brakes.

The present invention provides a releasable brake pedal assembly which includes an elongated pedal with an upper arm having an upper end pivotally mounted with respect to the vehicle's dash panel, and a lower arm having an upper end pivotally mounted to the lower end of the upper arm. A drivingly engaging connection between the upper arm and the brake actuator piston rod is positioned vertically intermediate the pivotal connections of the upper arm to the dash panel and the lower arm to the upper arm.

The lower arm is pivotally movable between a vertical position in which it abuttingly engages the upper arm for actuating movement with rotative movement toward horizontal positions limited in travel by the underside of the instrument panel or bolster.

The lower arm may be resiliently biased toward vertical orientation with the upper arm.

The invention will now be described, by way of example, with reference to the accompanying drawings, in which:
Figure 1 is a diagrammatic view of the brake pedal assembly, of conventional design, used in co-operation with a brake master cylinder assembly; and
Figure 2 is a diagrammatic view similar to Figure 1 showing the releasable brake pedal assembly of the present invention in its normal operative position and the position assumed in response to intrusive load.

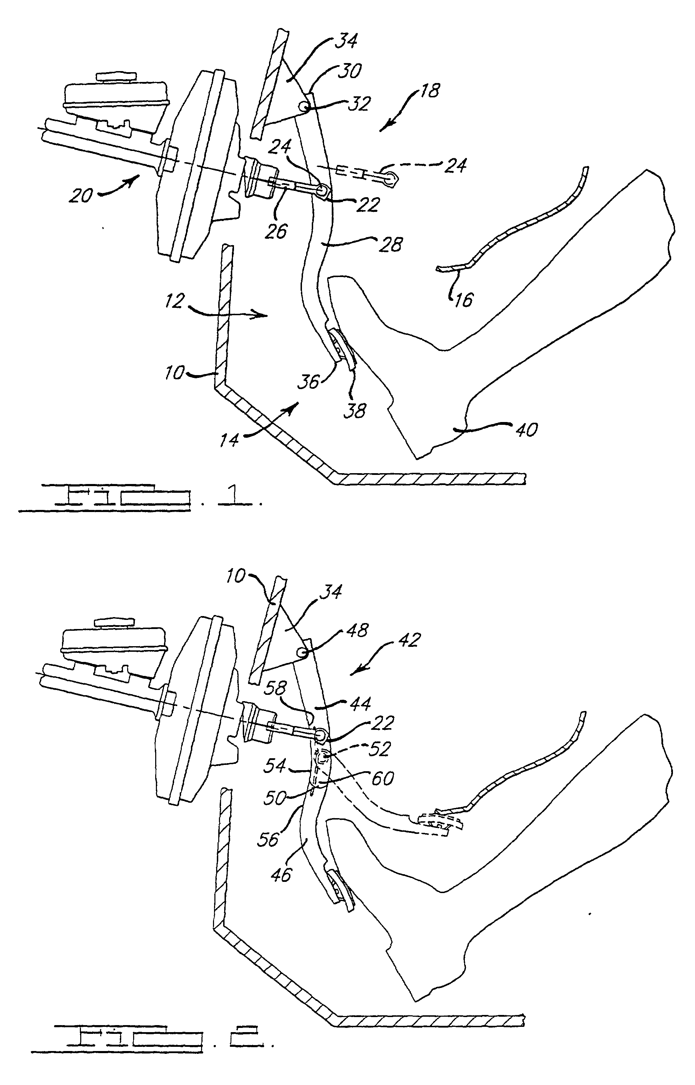

Turning now to the drawings, and in particular to Figure 1 thereof, a portion of an automobile is illustrated as including a body having a dash panel 10 providing a forward boundary of the passenger compartment, indicated generally at 12, defining a foot portion, indicated at 14. The foot portion 14 is bounded at its upper side by the underside of an instrument panel, indicated at 16, which may typically be the knee bolster area of the instrument panel. A brake pedal assembly, indicated at 18, is illustrated as being operatively engaged with the brake actuator assembly 20 The pedal assembly preferably includes a pocket such as the socket of ball and socket joint 22, which receives an end 24 of the brake actuator piston rod 26. The pedal assembly 18 includes an elongated pedal 28 having an upper end 30 pivotally mounted, as indicated at 32, to a trunion 34 secured to the dash panel 10. Proximate the lower end 36 of the pedal 30, a foot plate 38 is configured to be engageable with the foot 40 of the vehicle operator to pivot the pedal 28 clockwise, as shown in Figure 1, to drive the brake actuator piston rod 26 toward the brake actuator assembly 20 to actuate the vehicle brakes in a known manner. Upon imposition of the substantial instrusive force, the brake actuator piston rod 26 may be driven rearwardly with respect to the vehicle to the dotted line position shown in Figure 1 translating and pivoting the pedal assembly 18 with it. If the foot 40 of the occupant separates from the foot pad 38, the pedal 28 may be driven up over the foot.

To combat the mechanics of the high intrusion forces, an improved pedal assembly 42, as may best be seen in Figure 2, may be provided. The pedal assembly 42 differs from the pedal assembly 18 in that the elongated pedal 28 is replaced by an articulated device having an upper arm 44 and a lower arm 46. The upper arm 44 is pivotally connected at 48 to the trunion 34 by which it is mounted to the dash panel 10, and the lower arm 46 is pivotally mounted at 52 proximate the lower end 50 of the upper arm 44 and may be nested inside it in channel-like mating, as indicated in Figure 2. The socket 22 is provided at a position vertically intermediate upper pivot axis 48 and lower pivot axis 52 on upper arm 44. High intrusive forces imposed on the brake actuator assembly 20 or along its longitudinal extent will tend to drive the upper arm 44, but pivotal freedom at the lower pivot 52 permits upward swinging movement of the lower arm 46, as shown in Figure 2, until the foot plate 38 reaches the position in which it engages the bolster 16.

Counterclockwise movement of the lower arm 46 is limited by co-operation between mechanical abutments, indicated generally at 54, between the forward face 56 of the lower arm 46 and the inner face 58 of the upper arm 44. A spring, as indicated at 60, may be provided to urge the lower arm 46 toward the substantially vertical position shown in solid line in Figure 2, so that after an event in which high intrusive forces are encountered, the pedal will return to the operative position shown.

## Claims

1. A releasable brake pedal assembly for an automobile having a body defining a passenger compartment, the passenger compartment having a pedal portion in which the pedal is operatively engageable by the foot of an operator, the pedal portion being bounded on its forward end by a generally vertical dash panel and on its upper end by a generally horizontal bolster, the automobile further having a brake actuator piston rod for actuating the brakes of the vehicle, the brake pedal assembly comprising:
an elongated pedal subassembly (42) having,
an upper arm (44) having an upper end pivotally mounted with respect to the dash panel (10) at an upper pivot axis (48) and a lower end (50);
a lower arm (46) having an upper end pivotally connected to said upper arm (44) proximate said lower end (50) at a lower pivot axis (52); and
a mounting pocket (22) adapted to drivingly engage the brake actuator piston rod (26), said pocket (22) carried by said upper arm (44) longitudinally intermediate said upper pivot axis (48) and said lower pivot axis (52).

2. A releasable brake pedal assembly as claimed in claim 1, wherein said lower arm is pivotally movable with respect to said upper arm only between a first substantially vertical position and other positions rotated toward horizontal therefrom.

3. A releasable brake pedal assembly as claimed in claim 2, further including a spring resiliently biasing said lower arm toward said first substantially vertical position.

4. A releasable brake pedal assembly as claimed in claim 2, wherein said upper arm and said lower arm include co-operating surfaces preventing relative rotational movement from said first position away from said other positions.

5. A releasable brake pedal assembly as claimed in claim 1, wherein said lower arm has a lower end and includes a foot plate carried proximate said lower arm lower end adapted to permit the operation of said pedal subassembly by the foot of an operator to pivot said upper and lower arms in unison about said upper pivot axis.

6. A releasable brake pedal assembly as claimed in claim 5, wherein said lower arm is pivotally movable with respect to said upper arm only between a first substantially vertical position and other positions rotated toward horizontal therefrom.

7. A releasable brake pedal assembly as claimed in claim 6, further including a spring resiliently biasing said lower arm toward said first substantially vertical position.

8. A releasable brake pedal assembly as claimed in claim 6, wherein said upper arm and said lower arm include co-operating surfaces preventing relative rotational movement from said first position away from said other positions.

9. A releasable brake pedal assembly as claimed in claim 5, wherein said foot plate is abuttingly engageable with the bolster to limit rotation of said lower arm toward horizontal.

10. A releasable brake pedal assembly as claimed in claim 4, wherein said co-operative surfaces permit said relative rotational movement upon imposition of substantial load.

## Patentansprüche

1. Ein lösbarer Bremspedal-Aufbau für ein Automobil, das eine Karosserie besitzt die einen Fahrgastraum abgrenzt, wobei der Fahrgastraum einen Pedalraum aufweist in welchem das Pedal durch den Fuß des Bedieners bedienbar anzugreifen ist, und der Pedalraum an seinem vorderen Ende durch eine allgemein vertikale Prallplatte und an seinem oberen Ende durch ein allgemein horizontales Polster begrenzt wird; und wobei das Automobil weiterhin eine Bremsenantrieb-Kolbenstange zur Betätigung der Bremsen des Fahrzeugs besitzt, und der Bremspedal-Aufbau umfaßt:
einen verlängerten Pedal-Unteraufbau (42), der verfügt über:
einen oberen Arm (44), der ein bezüglich der Prallplatte (10) an der oberen Drehachse (48) drehbar montiertes, oberes Ende und ein unteres Ende (50) besitzt;
einen unteren Arm (46), der nahe diesem unteren Ende (50) an einer unteren Drehachse (52) drehbar mit diesem oberen Arm (44) verbunden ist; und
eine Montagehülse (22), die angepaßt ist um die Bremsenantrieb-Kolbenstange (26) betätigend anzugreifen, wobei diese Hülse (22) von diesem oberen Arm (44) in Längsrichtung zwischen dieser oberen Drehachse (48) und dieser unteren Drehachse (52) getragen wird.

2. Ein lösbarer Bremspedal-Aufbau nach Anspruch 1, in dem dieser untere Arm bezüglich dieses oberen Arms nur zwischen einer ersten, im wesentlichen vertikalen Stellung und anderen Stellungen drehbar beweglich ist, die daraus in Richtung auf die Horizontale gedreht sind.

3. Ein lösbarer Bremspedal-Aufbau nach Anspruch 2, der weiterhin eine Feder einschließt, welche diesen unteren Arm auf diese erste, im wesentlichen vertikale Stellung hin federnd vorspannt.

4. Ein lösbarer Bremspedal-Aufbau nach Anspruch 2, in dem dieser obere Arm und dieser untere Arm zusammenwirkende Oberflächen einschließen, die relative Drehbewegungen von dieser ersten Stellung weg zu dieser anderen Stellung hin verhindern.

5. Ein lösbarer Bremspedal-Aufbau nach Anspruch 1, in dem dieser untere Arm ein unteres Ende besitzt und eine nahe diesem unteren Ende des unteren Arms getragene Fußplatte einschließt, die angepaßt ist um die Bedienung dieses Pedal-Unteraufbaus mit dem Fuß eines Bedieners zu erlauben; um diese oberen und unteren Arme gemeinsam um die obere Drehachse zu schwenken.

6. Ein lösbarer Bremspedal-Aufbau nach Anspruch 5, in dem dieser untere Arm bezüglich dieses oberen Arms nur zwischen einer ersten, im wesentlichen vertikalen Stellung und anderen Stellungen drehbar beweglich ist, die daraus in Richtung auf die Horizontale gedreht sind.

7. Ein lösbarer Bremspedal-Aufbau nach Anspruch 6, der weiterhin eine Feder einschließt, welche diesen unteren Arm auf diese erste, im wesentlichen vertikale Stellung hin federnd vorspannt.

8. Ein lösbarer Bremspedal-Aufbau nach Anspruch 6, in dem dieser obere Arm und dieser untere Arm zusammenwirkende Oberflächen einschließen, die relative Drehbewegungen von dieser ersten Stellung weg zu diesen anderen Stellungen hin verhindern.

9. Ein lösbarer Bremspedal-Aufbau nach Anspruch 5, in dem diese Fußplatte anstoßend an dem Polster angreift, um die Rotation dieses unteren Arms in Richtung auf die Horizontale zu begrenzen.

10. Ein lösbarer Bremspedal-Aufbau nach Anspruch 4, in dem diese zusammenwirkenden Oberflächen nach Aufzwingen einer wesentlichen Belastung diese relative Drehbewegung zulassen.

## Revendications

1. Ensemble de pédale de frein pouvant être relâchée destiné à une automobile comportant une caisse définissant un habitacle, l'habitacle comportant une partie de pédale où la pédale peut être mise en prise de façon fonctionnelle par le pied d'un opérateur, la partie de pédale étant limitée sur son extrémité avant par un tablier sensiblement vertical et sur son extrémité supérieure par une protection sensiblement horizontale, l'automobile comportant en outre une tige de piston d'actionneur de frein destinée à actionner les freins du véhicule, l'ensemble de pédale de frein comprenant :
un sous-ensemble de pédale allongé (42) comportant,
un bras supérieur (44) comportant une extrémité supérieure montée avec possibilité de pivotement par rapport au tablier (10) au niveau d'un axe de pivot supérieur (48) et une extrémité inférieure (50),
un bras inférieur (46) comportant une extrémité supérieure relié avec possibilité de pivotement audit bras supérieur (44) proche de ladite extrémité inférieure (50) au niveau d'un axe de pivot inférieur (52), et
une alvéole de montage (22) conçue en vue d'une mise en prise d'entraînement avec la tige de piston d'actionneur de frein (26), ladite alvéole (22) portée par ledit bras supérieur (44) étant longitudinalement intermédiaire entre ledit axe de pivot supérieur (48) et ledit axe de pivot inférieur (52).

2. Ensemble de pédale de frein pouvant être relâchée selon la revendication 1, dans lequel ledit bras inférieur est mobile avec possibilité de pivotement par rapport audit bras supérieur uniquement entre une première position sensiblement verticale et d'autres positions tournées vers l'horizontale à partir de celle-ci.

3. Ensemble de pédale de frein pouvant être relâchée selon la revendication 2, comprenant en outre un ressort sollicitant de façon élastique ledit bras inférieur vers ladite première position sensiblement verticale.

4. Ensemble de pédale de frein pouvant être relâchée selon la revendication 2, dans lequel ledit bras supérieur et ledit bras inférieur comprennent des surfaces en interaction empêchant un déplacement de rotation relatif par rapport à ladite première position à l'écart desdites autres positions.

5. Ensemble de pédale de frein pouvant être relâchée selon la revendication 1, dans lequel ledit bras inférieur comporte une extrémité inférieure et comprend une plaque pour pied supportée de façon proche de ladite extrémité inférieure de bras inférieur, conçue pour permettre l'actionnement dudit sous-ensemble de pédale par le pied d'un opérateur afin de faire pivoter lesdits bras supérieur et inférieur en même temps autour dudit axe de pivot supérieur.

6. Ensemble de pédale de frein pouvant être relâchée selon la revendication 5, dans lequel ledit bras inférieur est mobile avec possibilité de pivotement par rapport audit bras supérieur uniquement entre une première position sensiblement verticale et d'autres positions tournées vers l'horizontale à partir de celle-ci.

7. Ensemble de pédale de frein pouvant être relâchée selon la revendication 6, comprenant en outre un ressort sollicitant de façon élastique ledit bras inférieur vers ladite première position sensiblement verticale.

8. Ensemble de pédale de frein pouvant être relâchée selon la revendication 6, dans lequel ledit bras supérieur et ledit bras inférieur comprennent des surfaces en interaction empêchant un déplacement de rotation relatif par rapport à ladite première position à l'écart desdites autres positions.

9. Ensemble de pédale de frein pouvant être relâchée selon la revendication 5, dans lequel ladite plaque pour pied peut venir en contact en butée avec la protection afin de limiter la rotation dudit bras inférieur vers l'horizontale.

10. Ensemble de pédale de frein pouvant être relâchée selon la revendication 4, dans lequel lesdites surfaces de coopération permettent ledit déplacement de rotation relatif lorsque l'on impose une charge importante.
